**Europäisches Patentamt**

**European Patent Office**

**Office européen des brevets**

(19)

(11) Veröffentlichungsnummer : **0 340 858 B1**

(12)

# EUROPÄISCHE PATENTSCHRIFT

(45) Veröffentlichungstag der Patentschrift :
**14.10.92 Patentblatt 92/42**

(21) Anmeldenummer : **89201094.3**

(22) Anmeldetag : **28.04.89**

(51) Int. Cl.⁵ : **A01D 25/04**

(54) **Mehrreihiger Roder zum Roden von Rüben und ähnlichen Gewächsen.**

(30) Priorität : **02.05.88 NL 8801148**

(43) Veröffentlichungstag der Anmeldung :
**08.11.89 Patentblatt 89/45**

(45) Bekanntmachung des Hinweises auf die
Patenterteilung :
**14.10.92 Patentblatt 92/42**

(84) Benannte Vertragsstaaten :
**BE DE FR NL**

(56) Entgegenhaltungen :
**DE-A- 3 238 292**
**FR-A- 2 385 317**
**FR-A- 2 581 286**
**US-A- 2 993 545**

(73) Patentinhaber : **Wielaard, Marinus Cornelis**
**Ketelmeerweg 1A**
**NL-8308 RA Nagele (NL)**

(72) Erfinder : **Wielaard, Marinus Cornelis**
**Ketelmeerweg 1A**
**NL-8308 RA Nagele (NL)**

(74) Vertreter : **Smulders, Theodorus A.H.J., Ir. et al**
**Vereenigde Octrooibureaux Nieuwe Parklaan**
**97**
**NL-2587 BN 's-Gravenhage (NL)**

EP 0 340 858 B1

## Beschreibung

Die Erfindung bezieht sich auf einen mehrreihigen Roder zum Roden von Rüben und ähnlichen Gewächsen, umfassend eine Anzahl Paare von Rodungsrädern, wobei die ein Paar bildenden Rodungsräder V-förmig in bezug aufeinander montiert sind und im Betrieb zum Roden von Rüben u.dgl. zusammenarbeiten, und wobei von jedem Paar von Rodungsrädern ein Rodungsrad motorisch angetrieben ist.

Eine derartige Vorrichtung ist aus der niederländischen Patentanmeldung 7416583 bekannt. Bei dem bekannten Rübenroder wird im Betrieb von jedem Paar zusammenarbeitender Rodungsräder das eine Rodungsrad durch den Boden angetrieben, während das andere Rodungsrad über geeignete Uebertragungsorgane motorisch angetrieben wird. So haben die zu einem Rodungsräderpaar gehörenden Rodungsräder verschiedene Geschwindigkeiten und die zwischen zwei Rodungsrädern gefassten Rüben werden drehend gerodet, wodurch ein gutes Ausgraben aus dem Erdboden gefördert wird.

Ein Nachteil dieser bekannten Vorrichtung ist, dass es bei Anwendung auf schwerem Boden unter feuchten Umständen oft geschieht, dass die durch den Boden angetriebenen Rodungsräder zum Stillstand kommen, weil der zwischen die Speichen der Rodungsräder gepresste Boden nicht mehr in genügendem Masse abgeführt werden kann. Beim Stillstehen eines der Rodungsräder eines Paares von Rodungsrädern werden die Rüben schwer beschädigt.

Die Aufgabe der Erfindung ist die Beseitigung des geschilderten Nachteils. Dazu wird gemäss der Erfindung ein Rübenroder der beschriebenen Art dadurch gekennzeichnet, dass alle zwischen den äusseren Rodungsrädern liegenden Rodungsräder im Betrieb über Uebertragungsorgane motorisch angetrieben werden, wobei die zu einem zusammenarbeitenden Paar gehörenden Rodungsräder unabhängig voneinander angetrieben werden.

Im Nachstehenden wird die Erfindung unter Hinweis auf die beiliegende Zeichnung näher beschrieben.

Es zeigen:
Fig. 1 eine schematische hintere Ansicht eines Ausführungsbeispiels eines Roders gemäss der Erfindung;
Fig. 2 ein Detail eines Ausführungsbeispiels eines Roders gemäss der Erfindung;
Fig. 3 und Fig. 4 in schematischer Darstellung zwei andere Ausführungsbeispiele eines Roders gemäss der Erfindung.

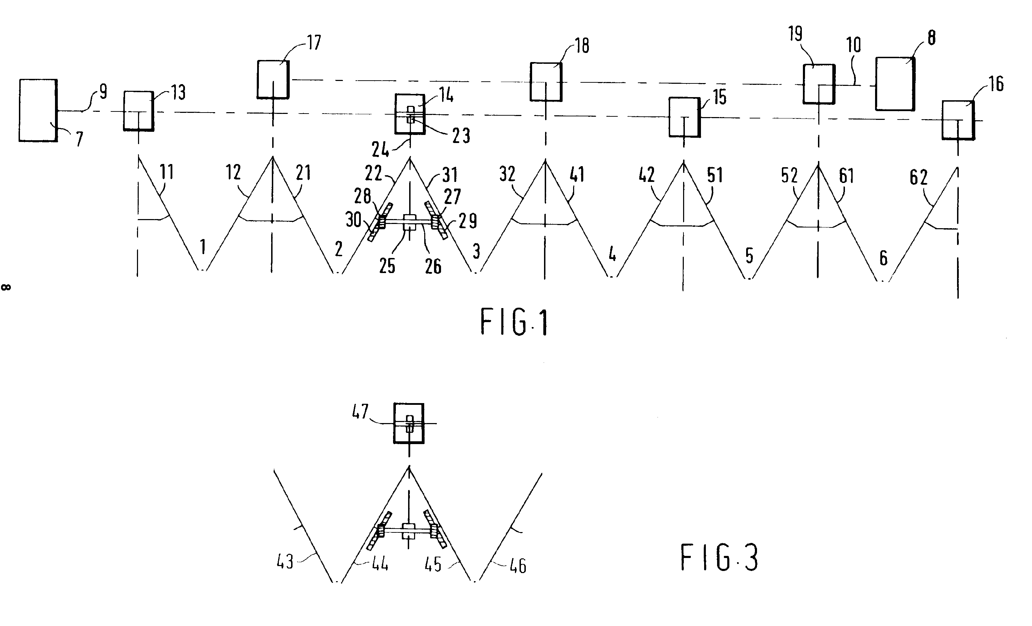

Fig. 1 zeigt schematisch eine hintere Ansicht eines Ausführungsbeispiels eines Roders gemäss der Erfindung. Der Rahmen ist der Deutlichkeit halber nicht wiedergegeben.

Die wiedergegebene Vorrichtung ist ein sechsreihiger Roder mit sechs Paaren 1 bis 6 V-förmig aufgestellter Rodungsräder. Jedes Paar hat ein linkes und ein rechtes Rodungsrad 11,12; 21,22, bis 61,62.

Um zu vermeiden, dass ein Rodungsrad in schwerem Boden zum Stillstand kommt, ist jedes Rodungsrad gemäss diesem Beispiel ein motorisch angetriebenes Rad. Wenn es erwünscht ist, die zu erntenden Rüben oder ähnliche Gewächse drehend zu roden, sollen die zu einem zusammenarbeitenden Paar gehörenden Rodungsräder mit verschiedenen Geschwindigkeiten angetrieben werden.

Dazu sind gemäss dem Beispiel der Figur 1 jeweils das eine Rodungsrad eines ersten Paares und das benachbarte Rodungsrad eines nächstliegenden Paares mit ersten zentralen Antriebsmitteln gekuppelt. Das andere Rodungsrad des ersten Paares ist ebenso wie das andere Rodungsrad des genannten nächstliegenden Paares mit zweiten zentralen Antriebsmitteln gekuppelt.

In dieser Weise sind in Fig. 1 die Rodungsräder 11; 22,31; 42,51; und 62 mit einem schematisch angegebenen Motor 7 gekuppelt, während die Rodungsräder 12,21; 32,41; und 52,61 mit einem schematisch angegebenen Motor 8 gekuppelt sind.

Die Motoren 7 und 8 können über Wellen 9 bzw. 10 rechtwinklige Uebertragungen 13,14,15,16 bzw. 17,18,19 antreiben. Die Teile der Wellen 9 bzw. 10 zwischen den rechtwinkligen Uebertragungen können in einer praktischen Ausführungsform über Kardankupplungen befestigte Wellenabschnitte sein.

Die rechtwinkligen Uebertragungen können in vorteilhafter einfacher Weise verwirklicht werden mit Hilfe eines Kettenrads, das über eine Kette ein zweites Kettenrad antreibt, das zwischen zwei zu verschiedenen Paaren gehörenden Rodungsrädern montiert ist.

Dies alles ist schematisch angegeben für die rechtwinklige Uebertragung 14, die ein Kettenrad 23 aufweist, das über eine Kette 24 ein zweites Kettenrad 25 antreibt. Das Kettenrad 25 ist in der Mitte einer Horizontalwelle 26 montiert, die an den Enden Zahnräder 27,28 trägt, die mit auf den Naben der Rodungsräder 22 bzw. 31 montierten Zahnrädern 29,30 im Eingriff sind.

Der Motor 7 treibt also im Betrieb über die Welle 9, die Uebertragung 14, die Kette 24 und die Zahnräder 27,29 bzw. 28,30 das rechte Rodungsrad 22 des Rodungsräderpaares 2 und das linke Rodungsrad 31 des Rodungsräderpaares 3 an. Das linke Rodungsrad des Rodungsräderpaares 2 und das rechte Rodungsrad des Rodungsräderpaares 3 werden über Uebertragungen 17,18 von dem Motor 8 angetrieben. Die Geschwindigkeiten der zu einem Paar gehörenden Rodungsräder können also unabhängig voneinander eingestellt werden, so dass Anpassung an die Bodenart und die Bodenbeschaffenheit möglich ist, und die Rüben nach Wunsch drehend oder nicht drehend gerodet werden können.

Bemerkt wird, dass der Antrieb der Rodungsräder in verschiedenen Weisen erfolgen kann. In der Praxis kann man statt der gezeichneten Motoren 7 und 8 die Zapfwelle eines mit dem Roder gekuppelten Schleppers anwenden.

Die Zapfwelle kann dann über geeignete Uebertragungsorgane die Wellen 9 und 10 mit denselben oder verschiedenen Geschwindigkeiten antreiben. Die Uebertragungsverhältnisse, die durch die rechtwinkligen Uebertragungen 13 bis 16 bzw. 17 bis 19 bestimmt werden, können gleich oder verschieden sein. Weiter könnten die Wellen 9 und 10 zu einer einzigen Welle kombiniert werden, die alle rechtwinkligen Uebertragungen antreibt.

Die rechtwinkligen Uebertragungen 13 bis 19 können auch rechtwinklige Zahnradübertragungen aufweisen mit einer Abtriebswelle, die mit einer rechtwinkligen, das Zahnrad 25 ersetzenden Zahnradübertragung gekuppelt ist mit zwei Halbwellen, die sich zu den Rodungsrädern erstrecken. Eine derartige Abtriebswelle kann bei den Enden homokinetische Kupplungen aufweisen. Dasselbe gilt für eventuelle Halbwellen. Die Zahnräder 27,29 bzw. 28,30 können dabei als konische Zahnräder ausgebildet sein.

Gemäss der Erfindung kann jedoch vorteilhaft eine Kettenübertragung angewendet werden, wie im Vorstehenden schon beschrieben wurde. Die Ketten 24 können sich gemäss einer näheren Ausarbeitung der Erfindung vertikal erstrecken, so dass ein optimales Bodenspiel erhalten wird. Ausserdem kann der anzuwendende Kettenschutz dann gleichfalls als Tragarm für die zwei über die Kette angetriebenen Rodungsräder dienen. Um die Kette zwischen umgekehrt V-förmig aufgestellte, über die Kette anzutreibende Rodungsräder, wie 22,31, führen zu können, sind gemäss der Erfindung die V-förmigen Rodungsräderpaare etwas gekippt, wodurch die Spitze der V-Form und also auch die oben liegende Spitze der umgekehrten V-Form, die von den zwei über eine einzige Kette anzutreibenden Rodungsrädern gebildet wird, nicht mehr gerade über den Mittelpunkten der Rodungsräder liegt.

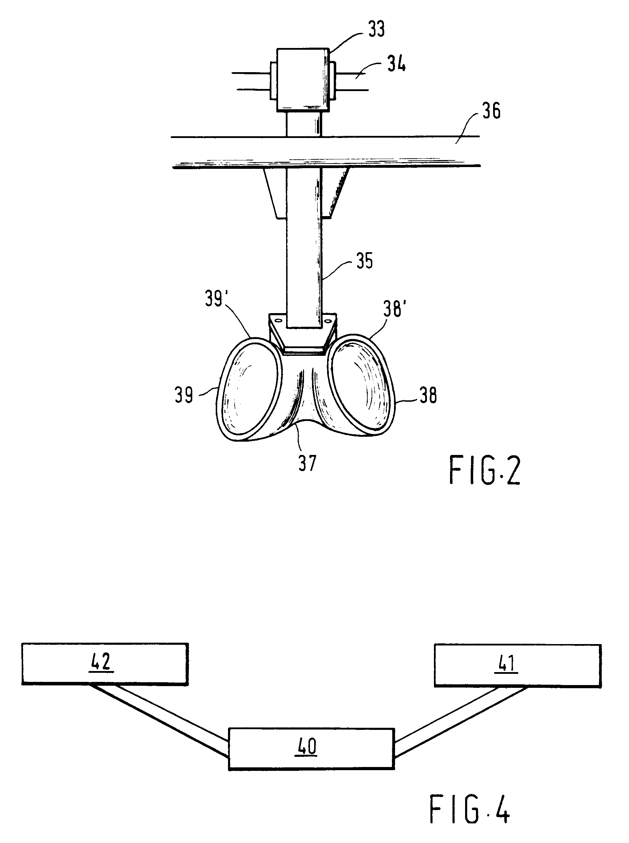

Dies alles ist in Vorderansicht in Fig. 2 wiedergegeben. Fig. 2 zeigt das Gehäuse 33 einer rechtwinkligen Uebertragung, wie z.B. 14, angetrieben von einer Welle 34. Das Gehäuse 33 ist an ein als Kettenschutz dienendes rohrförmiges Profil 35 mit rechteckigem Querschnitt angeschlossen. Das Profil 35 ist an einem horizontalen Rahmenbalken 36 befestigt. Das Unterende des Profils 35 trägt ein Gehäuse 37, das die Welle 26 der Zahnräder 25,27,28,29,30 aufnehmen kann. Man kann sich vorstellen, dass das Gehäuse aus zwei Rohrteilen 38,39 aufgebaut ist, deren Achsen sich von einem Schnittpunkt unter dem Profil 35 schräg nach vorne und aufwärts erstrecken, wobei die Rohre in verhältnismässig kurzem Abstand von dem Schnittpunkt der Achsen rechtwinklig abgeschnitten sind. Auf den offenen Enden der Rohrteile können Deckel befestigt werden, worin die Achsen der Rodungsräder gelagert sind und wobei die Achsen mit in die Rohrteile ragenden Zahnrädern versehen sind.

Auf diese Weise bildet jedes Kettenschutzprofil 35 zusammen mit dem Gehäuse 37 ein Tragorgan für zwei zu verschiedenen Paaren gehörende Rodungsräder.

Gemäss einer näheren Ausarbeitung des Erfindungsgedankens ist es bei der oben beschriebenen Konstruktion möglich, trotz der Tatsache, dass die Achsen zweier zusammen angetriebenen Rodungsräder nicht miteinander in Flucht liegen, die Rodungsräder doch mittels einer einzigen geraden Welle 26 und Stirnräder 27,29 bzw. 28,30, jedoch mit schräger Verzahnung, anzutreiben, wie in Fig. 1 und auch in Fig. 3 gezeigt ist. Dadurch entsteht ein sehr robuster und relativ preisgünstiger Antrieb, der ein maximales Bodenspiel des Roders ermöglicht.

Die Stirnräder 27 bzw. 28 liegen bei dieser Konstruktion gleichsam oberhalb der Stirnräder 29 bzw. 30. Zum Verschaffen des dazu benötigten Raumes sind am Gehäuse 37 stellenweise Ausstülpungen 38', 39' gebildet.

Bemerkt wird, dass das Problem, dass die durch den Boden angetriebenen Rodungsräder zum Stillstand kommen, weil der zwischen die Speichen gepresste Boden nicht oder in ungenügender Weise abgeführt werden kann, nicht immer oder in geringerem Masse auftritt, wenn es die äusseren Rodungsräder eines Roders betrifft. In einem solchen Fall hat es sich gezeigt, dass der Boden auch unter schweren Umständen meistens wohl genügende Ausweichmöglichkeiten hat.

Der Antrieb der äusseren Rodungsräder könnte daher erwünschtenfalls unterbleiben. In Fig. 1 könnten dann die Uebertragungen 13 und 16 weggelassen werden.

Für einen zweireihigen Roder kann dann die in Fig. 3 schematisch angegebene sehr einfache Konstruktion angewendet werden.

Eine derartige Vorrichtung umfasst zwei Paare Rodungsräder 43,44 bzw. 45,46, von denen nur die Räder 44 und 45 zusammen auf die schon beschriebene Weise über eine Uebertragung 47, die direkt mit der Zapfwelle eines Schleppers gekuppelt sein kann, angetrieben werden. Die äusseren Rodungsräder 43 und 46 werden in diesem Beispiel durch den Boden angetrieben.

Bemerkt wird, dass nach dem Vorstehenden dem Fachmann verschiedene Modifikationen naheliegen. So kann beispielsweise das als Kettenschutz dienende Profil 35 in einer Modifikation z.B. eine Kardanwelle statt einer Kette enthalten. Auch ist es möglich, eine Anzahl zweireihiger Roder zu einer einzigen mehrreihigen Rodungs-Vorrichtung zu kombinieren, indem zwei oder mehrere zweireihige Roder versetzt zueinander montiert werden, wie in Fig. 4 schematisch angegeben ist.

Fig. 4 zeigt schematisch eine für sechs Reihen geeignete Rodungs-Vorrichtung, die aus drei zweireihigen Rodern 40,41,42 aufgebaut ist, wobei jeder Roder in bezug auf den nächstliegenden zweireihigen Roder versetzt montiert ist. An Stelle von zwei äusseren Rodungsrädern sind jetzt gleichsam sechs äussere Rodungsräder entstanden, die, wie schon bemerkt wurde, durch den Boden antreibbar sein könnten. In diesem Fall kann eine verhältnismässig geringe Anzahl identischer Ueber tragungen angewendet werden.

Weiter ist es im Prinzip nicht notwendig, dass zwei zu benachbarten Paaren gehörende Rodungsräder, wie z.B. die Rodungsräder 22 und 31 mit derselben Geschwindigkeit angetrieben werden. Das Uebertragungsverhältnis der Zahnräder 28,30 kann z.B. von dem der Zahnräder 27,29 verschieden sein. Auch ist es möglich, die Rodungsräder alle individuell anzutreiben.

Ferner kann man gegebenenfalls in Kombination mit einer mechanischen Uebertragung hydraulische oder pneumatische Antriebsmittel anwenden, welche die Rodungsräder zentral oder individuell antreiben. So könnte z.B. jedes motorisch anzutreibende Rodungsrad mit einem direkt auf dessen Achse angeordneten Hydromotor versehen sein.

**Patentansprüche**

1. Mehrreihiger Roder zum Roden von Rüben und ähnlichen Gewächsen, umfassend eine Anzahl Paare (1-6) von Rodungsrädern (11, 12; 21, 22; ... 61, 62; 43, 44; 45, 46), wobei die ein Paar bildenden Rodungsräder V-förmig in bezug aufeinander montiert sind und im Betrieb zum Roden von Rüben u.dgl. zusammenarbeiten, und wobei von jedem Paar von Rodungsrädern ein Rodungsrad motorisch angetrieben ist, dadurch gekennzeichnet, dass alle zwischen den äusseren Rodungsrädern (11, 62; 43, 46) liegenden Rodungsräder im Betrieb motorisch angetrieben werden, wobei die zu einem zusammenarbeitenden Paar gehörenden Rodungsräder unabhängig voneinander angetrieben werden.

2. Mehrreihiger Roder nach Anspruch 1, dadurch gekennzeichnet, dass zwei benachbarte, zu verschiedenen Paaren gehörende Rodungsräder miteinander gekuppelt sind und über dieselben Uebertragungsorgane (13-19; 47; 23-30) angetrieben werden.

3. Mehrreihiger Roder nach Anspruch 1 oder 2, gekennzeichnet durch eine Anzahl einander abwechselnder erster und zweiter Sätze nebeneinander liegender aber zu verschiedenen Paaren gehörender Rodungsräder, wobei die ersten Sätze (11, 12, 31, 41, 51, 61) mit ersten zentralen Antriebsmitteln (7, 9) gekuppelt sind und die zweiten Sätze (12, 22, 32, 42, 52, 62) mit zweiten zentralen Antriebsmitteln (8, 10) gekuppelt sind.

4. Mehrreihiger Roder nach Anspruch 3, dadurch gekennzeichnet, dass die zentralen Antriebsmittel (7, 9; 10, 8) eine Anzahl durch Antriebswellen (9, 10) miteinander gekuppelter rechtwinkliger Uebertragungen (13-19) umfassen, die jeweils antreibend mit einem Satz Rodungsräder gekuppelt sind.

5. Mehrreihiger Roder nach Anspruch 4, dadurch gekennzeichnet, dass eine rechtwinklige Uebertragung (13-19) ein erstes Kettenrad (23) umfasst, das über eine Kette (24) mit einem zwischen zwei benachbarten anzutreibenden Rodungsrädern (22, 31) angeordneten zweiten Kettenrad (25) verbunden ist, welches zweite Kettenrad (25) mit den Rodungsrädern gekuppelt ist.

6. Mehrreihiger Roder nach einem der vorhergehenden Ansprüche, dadurch gekennzeichnet, dass jedes Rodungsrad an der von dem zu demselben Paar gehörenden Rodungsrad abgewandten Seite ein Stirnrad (29, 30) mit schräger Verzahnung trägt, das mit einem antreibenden ähnlichen Stirnrad (27, 28) mit schräger Verzahnung zusammenarbeitet.

7. Mehrreihiger Roder nach Anspruch 6, dadurch gekennzeichnet, dass die antreibenden Zahnräder (27, 28) für zwei benachbarte Rodungsräder verschiedener Paare auf einer gemeinsamen Welle (26) befestigt sind.

8. Mehrreihiger Roder nach einem der Ansprüche 4 bis 7, dadurch gekennzeichnet, dass die Kupplung zwischen jeder rechtwinkligen Uebertragung und den mittels dieser rechtwinkligen Uebertragung antreibbaren Rodungsrädern ein längliches Uebertragungsorgan (24) umfasst, das von einem Profil (35) umschlossen ist, welches Profil (35) gleichfalls ein Teil der Aufhängung der Rodungsräder ist.

9. Mehrreihiger Roder, nach einem der Ansprüche 4 bis 8, dadurch gekennzeichnet, dass die Paare (1-6) V-förmig in bezug aufeinander montierter Rodungsräder etwas nach vorne gekippt sind und dass die rechtwinkligen Uebertragungen sich im wesentlichen vertikal oberhalb der Verbindungslinie der Mittelpunkte der über eine rechtwinklige Uebertragung anzutreibenden Rodungsräder befindet.

10. Mehrreihiger Roder nach Anspruch 8 oder 9, dadurch gekennzeichnet, dass das Profil (35) im wesentlichen vertikal an einem im wesentlichen horizontalen Rahmenteil (36) befestigt ist und an der Unterseite ein Gehäuse (37) trägt, das zwei kurze rohrförmige Teile (38, 39) umfasst, deren Achsen sich von einem Schnittpunkt aus schräg nach oben und nach vorne erstrecken.

11. Mehrreihiger Roder nach Anspruch 10, dadurch gekennzeichnet, dass jedes rohrförmige Teil (38, 39) eine Ausstülpung (38', 39') aufweist, die den antreibenden Zahnrädern (27, 28) für auf den Rodungsrädern angebrachte Zahnräder (29, 30) Raum bietet.

12. Mehrreihiger Roder nach einem der vorhergehenden Ansprüche, ausgebildet als zweireihiger Roder, gekennzeichnet durch eine einzige Antriebsvorrichtung (47) für die zwei mittleren Rodungsräder (44, 45), wobei die äusseren Rodungsräder (43,46) durch den Boden antreibbar sind.

13. Mehrreihiger Roder nach einem der vorhergehenden Ansprüche, gekennzeichnet durch eine Anzahl versetzt nebeneinander angeordneter zweireihiger Roder (40, 41, 42).

14. Mehrreihiger Roder nach Anspruch 13, dadurch gekennzeichnet, dass von jedem zweireihigen Roder (40, 41, 42) die äusseren Rodungsräder durch den Boden antreibbar sind.

15. Mehrreihiger Roder nach einem der vorhergehenden Ansprüche, dadurch gekennzeichnet, dass für den motorischen Antrieb der Rodungsräder hydraulische Antriebsmittel vorgesehen sind.

16. Mehrreihiger Roder nach Anspruch 15, dadurch gekennzeichnet, dass jedes anzutreibende Rodungsrad mit einem direkt auf dessen Achse angeordneten Hydromotor versehen ist.

**Claims**

1. A multi-row harvester for harvesting beets and similar crops, comprising a plurality of pairs (1-6) of lifting wheels (11, 12; 21, 22; ... 61, 62; 43, 44; 45, 46), said lifting wheels forming a pair being mounted in a V-shaped position relative to each other and cooperating during operation for harvesting beets and the like, and of each pair of lifting wheels one lifting wheel being power driven, characterized in that during operation all of said lifting wheels positioned between the outer lifting wheels (11, 62; 43, 46) are power driven, the lifting wheels belonging to a cooperating pair being driven independently of each other.

2. A multi-row harvester as claimed in claim 1, characterized in that two adjacent lifting wheels belonging to different pairs are interconnected and driven by means of the same transmission means (13-19; 47; 23-30).

3. A multi-row harvester as claimed in claim 1 or 2, characterized by a plurality of alternating first and second sets of lifting wheels being juxtaposed but belonging to different pairs, said first sets (11, 21, 31, 41, 51, 61) being connected to first central drive means (7, 9) and said second sets (12, 22, 32, 42, 52, 62) being connected to second central drive means (8, 10).

4. A multi-row harvester as claimed in claim 3, characterized in that said central drive means (7, 9; 10, 8) comprise a plurality of rectangular transmissions (13-19) interconnected by drive shafts (9, 10), each of said transmissions being drive connected to a set of lifting wheels.

5. A multi-row harvester as claimed in claim 4, characterized in that a rectangular transmission (13-19) comprises a first sprocket wheel (23) connected by means of a chain (24) to a second sprocket wheel (25) positioned between two adjacent lifting wheels (22, 31) to be driven, said second sprocket wheel (25) being connected to said lifting wheels.

6. A multi-row harvester as claimed in any of the preceding claims, characterized in that on the side away from the lifting wheel belonging to the same pair each lifting wheel carries a helical spur wheel (29, 30), said spur wheel cooperating with a driving similar helical spur wheel (27, 28).

7. A multi-row harvester as claimed in claim 6, characterized in that the driving gear wheels (27, 28) for two adjacent lifting wheels of different pairs are mounted on a common shaft (26).

8. A multi-row harvester as claimed in any of claims 4-7, characterized in that the connection between each rectangular transmission and the lifting wheels to be driven by means of said rectangular transmission comprises a longitudinal transmission means (24) enclosed by a section (35), said section (35) likewise forming part of the suspension of said lifting wheels.

9. A multi-row harvester as claimed in any of claims 4-8, characterized in that said pairs (1-6) of lifting wheels mounted in a V-shaped position relative to each other are tilted slightly forwards and that said rectangular transmissions are in a substantially vertical position above the connecting line of the centers of the lifting wheels to be driven by means of a rectangular transmission.

10. A multi-row harvester as claimed in claim 8 or 9, characterized in that said section (35) is mounted in a substantially vertikal position on a substantially horizontal frame portion (36) and carries on the lower side a housing (37) comprising two short tubular portions (38, 39), the axes of which extend from a point of intersection in an inclined upward and forward direction.

11. A multi-row harvester as claimed in claim 10, characterized in that each tubular portion (38, 39) shows a protuberance (38′, 39′) providing the driving gear wheels (27, 28) with room for gear wheels (29, 30) disposed on the lifting wheels.

12. A multi-row harvester as claimed in any of the preceding claims, designed as a two-row harvester, characterized by a single drive means (47) for the two central lifting wheels (44, 45), the outer lifting wheels (43, 46) being driven by the soil.

13. A multi-row harvester as claimed in any of the preceding claims, characterized by a plurality of staggered juxtaposed two-row harvesters (40, 41, 42).

14. A multi-row harvester as claimed in claim 13, characterized in that of each two-row harvester (40, 41, 42) the outer lifting wheels are driven by the soil.

15. A multi-row harvester as claimed in any of the preceding claims, characterized in that hydraulic drive means are provided for the power drive of the lifting wheels.

16. A multi-row harvester as claimed in claim 15, characterized in that each lifting wheel to be driven is provided with a hydromotor directly mounted on its axle.

**Revendications**

1. Arracheuse à plusieurs rangs pour l'arrachage de betteraves et de végétaux similaires, comprenant un nombre de paires (1-6) de roues d'arrachage (11, 12; 21, 22; ... 61, 62; 43, 44; 45, 46), les roues d'arrachage constituant une paire étant montées l'une par rapport à l'autre en forme de V et coopèrent fonctionnellement pour l'arrachage de betteraves et analogue, et dans laquelle une roue d'arracheuse de chaque paire de roues d'arracheuse est entraînée par moteur, caractérisée en ce que toutes les roues d'arracheuse situées entre les roues d'arracheuse extérieures (11, 62; 43, 46) sont entraînées pour leur fonctionnement par moteur, les roues d'arracheuse faisant partie d'une paire coopérante étant entraînées indépendamment l'une de l'autre.

2. Arracheuse à plusieurs rangs selon la revendication 1, caractérisée en ce que deux roues d'arracheuse avoisinantes, faisant partie de paires différentes, sont accouplées l'une à l'autre et sont entraînées par les mêmes organes de transmission (13-19; 47; 23-30).

3. Arracheuse à plusieurs rangs selon la revendication 1 ou 2, caractérisée par un nombre de premier et deuxième jeux alternants de roues d'arracheuses situées les unes à côté des autres mais faisant partie de paires différentes, les premiers jeux (11, 21, 31, 41, 51, 61) étant accouplés à des premiers moyens d'entraînement centraux (7, 9) et les deuxièmes jeux (12, 22, 32, 42, 52, 62) étant accouplés à des deuxièmes moyens d'entraînement centraux (8, 10).

4. Arracheuse à plusieurs rangs selon la revendication 3, caractérisée en ce que les moyens d'entraînement centraux (7, 9; 10, 8) comprennent un nombre de transmissions (13-19) rectangulaires accouplées les unes aux autres par l'intermédiaire d'arbres d'entraînement (9, 10) qui sont accouplés, respectivement, de façon menante, avec un jeu de roues d'arracheuse.

5. Arracheuse à plusieurs rangs selon la revendication 4, caractérisée en ce qu'une transmission rectangulaire (13-19) comprend une première roue à chaîne (23) qui est reliée, par l'intermédiaire d'une chaîne (24) à une deuxième roue à chaîne (25) disposée entre deux roues d'arracheuse (22, 31) avoisinantes à entraîner, ladite deuxième roue à chaîne (25) étant accouplée aux roues d'arracheuse.

6. Arracheuse à plusieurs rangs selon l'une des revendications précédentes, caractérisée en ce que chaque roue d'arracheuse supporte sur le côté opposé à la roue d'arracheuse faisant partie de la même paire une roue dentée droite (29, 30) présentant une denture oblique qui coopère avec une roue dentée droite similaire menante (27, 28) présentant une denture oblique.

7. Arracheuse à plusieurs rangs selon la revendication 6, caractérisée en ce que les roues dentées menantes (27, 28) de deux roues d'arracheuse avoisinantes de paires différentes sont fixées sur un arbre commun (26).

8. Arracheuse à plusieurs rangs selon l'une des revendications 4 à 7, caractérisée en ce que l'accouplement entre chaque transmission rectangulaire et les roues d'arracheuse pouvant être entraînées par l'intermédiaire de cette transmission rectangulaire comprend un organe de transmission oblong (24) qui est entourée d'un profil (35), ledit profil (35) étant également une partie de la suspension des roues d'arracheuse.

9. Arracheuse à plusieurs rangs selon l'une des revendications 4 à 8, caractérisée en ce que les paires (1-6) sont basculées en forme de V légèrement vers l'avant relativement à des roues d'arracheuse montées les unes par rapport aux autres, et en ce que les transmissions rectangulaires se trouvent essentiellement verticalement au-dessus de la ligne de liaison des centres des roues d'arracheuse à entraîner par une transmission rectangulaire.

10. Arracheuse à plusieurs rangs selon la revendication 8 ou 9, caractérisée en ce que le profil (35) est fixé essentiellement verticalement sur une partie de cadre (36) essentiellement horizontale et porte sur son côté inférieur un boîtier (37) qui entoure deux tronçons tubulaires courts (38, 39) dont les axes s'étendent à partir d'un point d'intersection obliquement vers le haut et vers l'avant.

11. Arracheuse à plusieurs rangs selon la revendication 10, caractérisée en ce que chaque tronçon tubulaire (38, 39) présente une protubérance (38', 39') qui ménage un espace aux roues dentées menantes (27, 28) pour les roues dentées (29, 30) montées sur les roues d'arracheuse.

12. Arracheuse à plusieurs rangs selon l'une des revendications précédentes, réalisée comme arracheuse à deux rangs, caractérisée par un seul dispositif d'entraînement (47) pour les deux roues d'arracheuse médianes (44, 45), les roues d'arracheuse extérieures (43, 46) pouvant être entraînées par le sol.

13. Arracheuse à plusieurs rangs selon l'une des revendications précédentes, caractérisée par un nombre d'arracheuses à deux rangs (40, 41, 42) disposées de façon décalée les unes à côté des autres.

14. Arracheuse à plusieurs rangs selon la revendication 13, caractérisée en ce que les roues d'arracheuses extérieures de chaque arracheuse à deux rangs (40, 41, 42) peuvent être entraînées par le sol.

15. Arracheuse à plusieurs rangs selon l'une des revendications précédentes, caractérisée en ce que des moyens d'entraînement hydrauliques sont prévus pour l'entraînement par moteur des roues d'arracheuse.

16. Arracheuse à plusieurs rangs selon la revendication 15, caractérisée en ce que chaque roue d'arracheuse à entraîner est pourvue d'un moteur hydraulique disposé directement sur son axe.

FIG.1

FIG.3

FIG·2

FIG·4